(19) Europäisches Patentamt / European Patent Office / Office européen des brevets

(11) **EP 2 978 647 B1**

(12) **FASCICULE DE BREVET EUROPEEN**

(45) Date de publication et mention de la délivrance du brevet:
**27.02.2019 Bulletin 2019/09**

(21) Numéro de dépôt: **13720449.1**

(22) Date de dépôt: **29.03.2013**

(51) Int Cl.:
*B60W 10/26* *(2006.01)*    *B60W 50/00* *(2006.01)*
*B60W 20/13* *(2016.01)*    *B60W 10/06* *(2006.01)*
*B60W 10/08* *(2006.01)*    *B60W 20/00* *(2016.01)*

(86) Numéro de dépôt international:
**PCT/FR2013/050708**

(87) Numéro de publication internationale:
**WO 2014/154951 (02.10.2014 Gazette 2014/40)**

(54) **PROCEDE ET DISPOSITIF DE COMMANDE D'UN FACTEUR D'EQUIVALENCE ENERGETIQUE DANS UN GROUPE MOTOPROPULSEUR HYBRIDE**

VERFAHREN UND VORRICHTUNG ZUR STEUERUNG EINES ENERGIEÄQUIVALENZFAKTORS BEI EINEM HYBRIDMOTORANTRIEBSAGGREGAT

METHOD AND DEVICE FOR CONTROLLING AN ENERGY EQUIVALENCE FACTOR IN A HYBRID MOTOR PROPULSION PLANT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**03.02.2016 Bulletin 2016/05**

(73) Titulaire: **Renault S.A.S.**
**92100 Boulogne-Billancourt (FR)**

(72) Inventeurs:
• **DEBERT, Maxime**
  **F-78000 Versailles (FR)**
• **CHAMAILLARD, Yann**
  **F-45130 Le Bardon (FR)**
• **COLIN, Guillaume**
  **F-45160 Olivet (FR)**

(56) Documents cités:
FR-A1- 2 988 674        US-A1- 2002 107 618
US-A1- 2008 319 597     US-A1- 2010 179 714
US-A1- 2011 066 308

**Description**

La présente invention concerne la gestion de répartition des flux énergétiques dans un groupe motopropulseur hybride de véhicule automobile.

Plus précisément, elle a pour objet la détermination d'un facteur énergétique d'équivalence représentant la pondération appliquée entre l'apport d'énergie d'origine thermique et l'apport d'énergie d'origine électrique, pour minimiser sur un point de fonctionnement la consommation énergétique globale d'un groupe motopropulseur hybride de véhicule automobile, du type comprenant un moteur thermique et au moins un moteur électrique alimenté par une batterie.

Un groupe motopropulseur de véhicule automobile à propulsion ou à traction hybride comprend un moteur thermique et une ou plusieurs machines électriques, alimentées par au moins une batterie embarquée à bord du véhicule.

Les systèmes de commande des groupes motopropulseurs hybrides sont conçus pour gérer le fonctionnement et la synchronisation des différents moteurs en fonction de conditions de roulage, afin de limiter la consommation de carburant et de minimiser les émissions de particules polluantes. On parle de gestion des flux d'énergies thermique et électriques, pour désigner notamment la stratégie de pilotage mise en oeuvre dans le système de commande en vue d'optimiser la répartition de puissance entre les flux d'énergie thermique et les flux d'énergie électrique. Le principe mis en oeuvre pour choisir le meilleur point de fonctionnement consiste à minimiser la somme de la consommation thermique et de la consommation électrique en pondérant l'énergie d'origine électrique par un facteur de pondération ou d'équivalence.

Ce facteur pondère l'énergie électrique avec l'énergie thermique, c'est-à-dire qu'il donne la quantité de carburant nécessaire pour recharger d'une certaine quantité d'énergie électrique stockée dans la batterie ou, avec un raisonnement inverse, la quantité de carburant capable d'être économisée en utilisant une certaine quantité d'énergie provenant de la batterie. Pour que la stratégie de gestion d'énergie soit optimale sur un parcours, il est nécessaire que ce facteur d'équivalence soit unique et constant pour des conditions de roulage données. Il dépend de plusieurs paramètres comme la durée, la longueur kilométrique du parcours, le profil d'altitude rencontré, le mode de conduite, les conditions environnementales (ville, zone péri urbaine, autoroute...), etc.

Le document US 2011/0066308 A1 décrit un procédé conforme au préambule de la revendication 1.

Par la publication FR 2 935 123, on connaît un système et un procédé de commande d'un groupe motopropulseur hybride muni d'un module de détermination d'un mode de fonctionnement optimal et d'un module de détermination du point de fonctionnement du ou des moteurs au mode de fonctionnement optimal. Le système comporte un moyen de pondération apte à affecter la consommation de l'énergie électrique, et utilise un coefficient de pondération variable de façon inversement proportionnelle à l'état de charge de la batterie, en vue d'augmenter la valeur de pondération quand la batterie est déchargée, et de la réduire quand elle est chargée.

Selon cette méthode, le facteur d'équivalence, ou de pondération, dépend de façon linéaire de l'état de charge de la batterie. Lorsque la batterie est vide le facteur est élevé ce qui tend à recharger la batterie, et lorsque la batterie est pleine le facteur est faible ce qui décharge la batterie. L'avantage principal de ce type de pilotage est l'assurance de rester dans les limites utiles de la batterie, c'est-à-dire entre 0% et 100% de son état de charge, ou « SOC ». Ses inconvénients sont cependant :

- la difficulté d'adapter le facteur d'équivalence en fonction de l'environnement et du conducteur,
- une sous-estimation de la plage d'utilisation énergétique totale de la batterie, et
- la non prise en compte d'autres facteurs d'environnement, tels que les conditions de roulage.

Par la publication DE 1 032 3722, il est aussi connu de changer l'équivalence, en fonction de certaines conditions de roulage. Toutefois, la méthode décrite ne permet pas de prendre en compte la pente de la route ou le style de conduite du conducteur, ni d'utiliser l'intégralité de la plage énergétique de la batterie.

La présente invention propose un procédé et un dispositif de commande assurant un pilotage optimisé du facteur d'équivalence, en vue de s'approcher le plus possible de la solution optimale, en tenant compte de l'ensemble des facteurs influents.

Elle propose dans ce but de piloter le facteur d'équivalence de manière discrète en fonction de l'état d'énergie instantané de la batterie, et une cible d'énergie fonction des conditions de roulage du véhicule et/ou des prédictions des conditions roulage.

Le dispositif proposé comprend notamment un intégrateur d'un terme représentatif de la différence entre l'état de d'énergie instantané de la batterie et la cible d'état d'énergie.

D'autres caractéristiques et avantages de la présente invention ressortiront clairement à la lecture de la description suivante d'un mode de réalisation non limitatif de celle-ci en se reportant au dessin annexé, dont la figure unique représente de façon schématique le dispositif mis en oeuvre.

Dans ce dispositif, un premier comparateur C1 reçoit en valeurs d'entrée l'état d'énergie $soe_k$ de la batterie à l'instant k, et une valeur de cible d'état d'énergie $soe_{cible}$. La différence ($soe_{cible}$ - $soe_k$) est multipliée par un gain de

correction $K_p$. Un deuxième comparateur C2 fait la somme du résultat $[K_p(soe_{cible} - soe_k)]$ et d'un terme de correction de type intégral qui assure une correction du facteur d'équivalence en fonction des conditions de roulage rencontrées. Cette somme est saturée par le saturateur S qui assure au facteur d'équivalence de rester entre les bornes maîtrisées. Les bornes de saturation minimum, $(sat_{min} - 1/\eta)$ et maximum $(sat_{max} - 1/\eta)$, assurent la maîtrise des modes recharge et décharge forcés.

La saturation maximum $sat_{max}$ *est* la valeur d'équivalence maximum assurant une commande au groupe motopropulseur qui recharge au maximum l'énergie de la batterie. La saturation $sat_{min}$ est la valeur d'équivalence minimum assurant une commande au groupe motopropulseur qui décharge au maximum la batterie. L'intégrateur I intègre la différence entre la sortie du saturateur S et sa propre intégration multipliée par un gain de correction $K_i$ *à l'aide du comparateur C3.* En intégrant cette différence, l'intégrateur ne pourra pas s'emballer lorsque le système est en saturation. Cette méthode est connue sous le nom anglais d' « anti-windup » ou d'anti-emballement, ou dé saturateur en français. La sortie du saturateur est additionnée avec un terme $1/\eta$ de type « feedforward » en anglais, ou terme de pré positionnement en français, à l'aide du comparateur C4. Ce terme « feedforward », ou de pré-positionnement, permet d'adapter directement le facteur d'équivalence en fonction d'une situation de roulage reconnue et/ou prédite.

En résumé, le dispositif proposé comprend un intégrateur en boucle d'un terme représentatif de la différence entre l'état instantané de l'énergie de la batterie et l'état d'énergie cible de la batterie associé à un dispositif d'anti-emballement (« anti-windup »). Il comprend également un terme de compensation proportionnel.

Le pilotage, mis en oeuvre avec ce dispositif dispose aussi d'un terme de pré-compensation (« feedforward »). Le facteur d'équivalence est piloté de manière discrète d'après l'équation suivante :

$$S_{k+1} = 1/\eta_c + Kp( soe_{cible} - soe_{k+1}) + Kp\, Ki( soe_{cible} - soe_k)$$

Dans cette équation, $soe_{cible}$ est l'état d'énergie cible que l'on souhaite atteindre, et $soe_k$ *est* l'état d'énergie de la batterie à l'instant $k$. $K_p$ et $K_I$ *sont* respectivement les gains de correction proportionnel et intégral ; $\eta c$ *est* le rendement moyen de conversion de l'énergie électrique en énergie thermique. Le rendement moyen de conversion $\eta c$ *peut être* ainsi calculé pour s'adapter en permanence aux circonstances, à partir de la connaissance à-priori de conditions de roulage prévisibles, ou à partir d'analyse des précédentes conditions de roulage. La correction intégrale apporte une correction a postériori, des hypothèses d'équivalence énergétique.

Si, par exemple, un type de roulage « en embouteillage » est identifié, il est possible de donner au rendement de conversion $\eta_c$ une valeur adaptée aux embouteillages, et d'obtenir un facteur d'équivalence sensiblement différent du facteur d'équivalence sur autoroute.

Par ailleurs, la cible d'énergie visée $soe_{cible}$, peut être définie en fonction des conditions de roulage. Si le véhicule dispose d'un système de navigation, il est alors possible d'exploiter ses informations, pour optimiser la cible.

Enfin, lorsque l'équivalence est saturée, c'est-à-dire que le facteur d'équivalence s atteint des valeurs limite, imposant une recharge ou une décharge à tout prix de la batterie, le facteur d'équivalence s ne dépasse pas des limites (inférieure et supérieure) acceptables, car l' « antiwindup » évite tout emballement intempestif du terme intégral.

En conclusion, l'invention permet :

- une utilisation plus appropriée de l'énergie contenue dans la batterie et d'en tirer tous les bénéfices possibles pour réduire la consommation,
- de tenir compte de l'environnement et du conducteur,
- de tenir compte du profil d'altitude en cas d'information via la navigation, et
- une gestion des flux énergétiques basée davantage sur un « état d'énergie » de la batterie, que sur son état de charge, ce qui est plus avantageux d'un point de vue de la consommation.

**Revendications**

1. Procédé de pilotage d'un facteur énergétique d'équivalence (*s*) représentant la pondération appliquée entre l'apport d'énergie d'origine thermique et l'apport d'énergie d'origine électrique, pour minimiser sur un point de fonctionnement la consommation énergétique globale d'un groupe motopropulseur hybride pour véhicule automobile comprenant un moteur thermique et au moins un moteur électrique alimenté par une batterie, **caractérisé en ce que** ce facteur est piloté de manière discrète en fonction de l'état d'énergie instantané de la batterie ($soe_k$), d'une cible d'énergie ($soe_{cible}$) et des conditions de roulage du véhicule, et présente un terme intégré sur l'estimation de l'état d'énergie de la batterie, qui est fonction de la différence ($soe_{cible} - soe_k$) entre la cible et l'état d'énergie instantané de la batterie.

2.  Procédé de pilotage d'un facteur énergétique d'équivalence (*s*) selon la revendication 1, **caractérisé en ce que** la cible d'énergie (*soe*$_{cible}$) est fonction de prédictions des conditions de roulage.

3.  Procédé de pilotage d'un facteur d'équivalence *(s)* selon la revendication 1 ou 2, **caractérisé en ce que** le calcul du terme intégré est bouclé par un calcul proportionnel intégral sur l'état de charge de la batterie.

4.  Procédé de pilotage du d'un facteur d'équivalence (s) selon la revendication 1, 2 ou 3, **caractérisé en ce que** le terme intégré est bouclé par un facteur d'anti-emballement.

5.  Procédé de pilotage d'un facteur d'équivalence (s) selon l'une des revendications précédentes, **caractérisé en ce qu'**il est pré-compensé par un terme dépendant du rendement de conversion ($\eta_c$) de l'énergie électrique en énergie mécanique.

6.  Dispositif apte à exécuter un procédé de pilotage d'un facteur d'équivalence *(s)* conformément à l'une quelconque des revendications précédentes, **caractérisé en ce qu'**il comprend un saturateur, entre des bornes de saturation minimum *(sat$_{min}$ - 1/$\eta$)* et maximum *(sat$_{max}$ - 1/$\eta$)* assurant la maîtrise des modes recharge et décharge forcés.


**Patentansprüche**

1.  Verfahren zum Steuern eines Energie-Äquivalenzfaktors (s), der die Gewichtung darstellt, die zwischen der Energiezufuhr thermischen Ursprungs und der Energie elektrischen Ursprungs angewendet wird, um an einem Betriebspunkt den globalen Energieverbrauch einer Hybridantriebseinheit für ein Kraftfahrzeug zu minimieren, die einen Wärmekraftmotor und mindestens einen batteriegespeisten Elektromotor enthält, **dadurch gekennzeichnet, dass** dieser Faktor diskret abhängig vom augenblicklichen Energiezustand der Batterie (soe$_k$), einem Energieziel (soe$_{cible}$) und den Fahrbedingungen des Fahrzeugs gesteuert wird und einen in die Schätzung des Energiezustands der Batterie integrierten Term aufweist, der von der Differenz (soe$_{cible}$ - soe$_k$) zwischen dem Ziel und dem augenblicklichen Energiezustand der Batterie abhängt.

2.  Verfahren zum Steuern eines Energie-Äquivalenzfaktors (s) nach Anspruch 1, **dadurch gekennzeichnet, dass** das Energieziel (soe$_{cible}$) von Vorhersagen der Fahrbedingungen abhängt.

3.  Verfahren zum Steuern eines Äquivalenzfaktors (s) nach Anspruch 1 oder 2, **dadurch gekennzeichnet, dass** die Berechnung des integrierten Terms durch eine Proportional-Integral-Berechnung des Ladezustands der Batterie abgeschlossen wird.

4.  Verfahren zum Steuern eines Äquivalenzfaktors (s) nach Anspruch 1, 2 oder 3, **dadurch gekennzeichnet, dass** der integrierte Term durch einen Anti-Windup-Faktor abgeschlossen wird.

5.  Verfahren zum Steuern eines Äquivalenzfaktors (s) nach einem der vorhergehenden Ansprüche, **dadurch gekennzeichnet, dass** er durch einen Term vorkompensiert wird, der von der Umwandlungsleistung ($\eta_c$) der elektrischen Energie in mechanische Energie abhängt.

6.  Vorrichtung, die ein Verfahren zum Steuern eines Äquivalenzfaktors (s) gemäß einem der vorhergehenden Ansprüche ausführen kann, **dadurch gekennzeichnet, dass** sie einen Sättiger zwischen Mindestsättigungsgrenzen (sat$_{min}$ - 1/$\eta$) und Maximalsättigungsgrenzen (sat$_{max}$ - 1/$\eta$) enthält, der die Beherrschung der Lade- und Entlade-Zwangsmodi gewährleistet.


**Claims**

1.  Method for controlling an energy equivalence factor (s) representing the weighting applied between the infeed of energy of thermal origin and the infeed of energy of electrical origin in order to minimize at an operating point the overall energy consumption of a hybrid motor propulsion plant for a motor vehicle comprising a heat engine and at least one electric motor powered by a battery, **characterized in that** this factor is controlled in a discrete manner on the basis of the instantaneous state of energy of the battery (soe$_k$), on the basis of a target energy (soe$_{target}$) and on the basis of the running conditions of the vehicle, and has an integrated term regarding the estimation of the state of energy of the battery, which is dependent on the difference (soe$_{target}$ - soe$_k$) between the target and the instantaneous state of energy of the battery.

2. Method for controlling an energy equivalence factor (s) according to Claim 1, **characterized in that** the target energy ($soe_{target}$) is dependent on predictions regarding the running conditions.

3. Method for controlling an equivalence factor (s) according to Claim 1 or 2, **characterized in that** the calculation of the integrated term is looped by an integral proportional calculation regarding the state of charge of the battery.

4. Method for controlling an equivalence factor (s) according to Claim 1, 2 or 3, **characterized in that** the integrated term is looped by an anti-windup factor.

5. Method for controlling an equivalence factor (s) according to one of the preceding claims, **characterized in that** it is pre-compensated by a term dependent on the conversion yield ($\eta_c$) of the electrical energy into mechanical energy.

6. Device able to perform a method for controlling an equivalence factor (s) according to any one of the preceding claims, **characterized in that** it comprises a saturator between the minimum saturation *($sat_{min}$ - $1/\eta$)* and maximum saturation *($sat_{max}$ - $1/\eta$)* limits assuring the control of forced recharge and discharge modes.

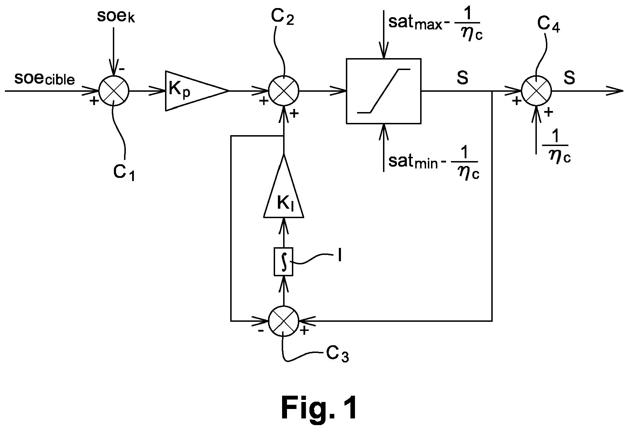

**Fig. 1**

## RÉFÉRENCES CITÉES DANS LA DESCRIPTION

**Documents brevets cités dans la description**

- US 20110066308 A1
- FR 2935123
- DE 10323722